# EUROPEAN PATENT APPLICATION

(11) **EP 4 651 340 A1**
(43) Date of publication of application: **19.11.2025**
(21) Application number: 24706166.6
(22) Date of filing: 11.01.2024
(51) Int. Cl.: H02J 50/10, H02J 50/70, H02J 50/80, H02J 50/90

(54) **DEVICE FOR ENERGY AND COMMUNICATION TRANSFER BY MEANS OF ASYNCHRONOUS MAGNETIC FLUX CONTROL**

(30) Priority: 11.01.2023 ES 202330012
(71) Applicant: Instituto Nacional de Técnica Aeroespacial "Esteban Terradas", 28850 Torrejón de Ardoz (ES)
(72) Inventor: AROCA HERNÁNDEZ-ROS, Claudio, 28040 Madrid (ES); DÍAZ MICHELENA, Marina, 28850 Torrejón de Ardoz (Madrid) (ES); DE DIEGO CUSTODIO, Eduardo, 28850 Torrejón de Ardoz (Madrid) (ES); GIMÉNEZ CONESA, Alejandro, 28850 Torrejón de Ardoz (Madrid) (ES); RIVERO RODRÍGUEZ, Miguel Ángel, 28850 Torrejón de Ardoz (Madrid) (ES)
(74) Representative: TRBL Intellectual Property
(86) International application number: PCT/ES2024/070016
(87) International publication number: WO 2024/149923

(57) **Abstract**

The invention relates to an energy and communication transfer device, comprising a first element (1) and a second element (2). The first element (1) comprises a first processing unit (10), a first power generator (11), a first ferromagnetic element (12), a first emitting winding (13) around the first ferromagnetic element (12). The first power generator (11) is configured to generate electrical energy by means of pulses having a width and rate defined by the first processing unit (10). The second element (2) comprises a second processing unit (20), a second ferromagnetic element (21), a first adjustment circuit (22), a first charge storage device (23) connected to the output of the first adjustment circuit (22) and a first receiving winding (24) around the second ferromagnetic element (21). The second processing unit (20) is configured to measure a set of status data relating to the operation of the second element (2). The first ferromagnetic element and the second ferromagnetic element are configured to be arranged in contact such that the magnetic flux generated in the first ferromagnetic element is transferred to the second ferromagnetic element. The second processing unit (20) is configured to send status data to the first processing unit (10). The first processing unit (10) is configured to receive the status data of the second element and is configured to define the working width and rate of the energy pulses based on the status data of the second element.

## Description

### TECHNICAL FIELD

This invention belongs to the technical field of energy transmission and communications between two devices.

### PRIOR ART

When transferring electrical energy and data without contact, magnetic energy can play a very interesting role, as it allows a high amount of energy to be communicated without the need for strict continuity of material media, as required by electrically conductive elements.

Furthermore, there are resonance phenomena that allow very efficient communication of magnetic energy, even when emitter and receiver are separated, since air can act as a transmitter element.

These resonance phenomena are the subject of multiple patents, such as documents WO 2016/153589 A2, WO 2021/067692 A2, WO 2015/161053 A1 or US 2018/114635 A1. The first document relates to a system that allows transferring energy and data by means of magnetic induction between devices that can be separated by fluids such as water, while the second and third documents relate to systems that allow transferring energy by means of magnetic induction to multiple devices, ranging from wearables, sensors, telephones, tablets or laptops to electric cars. The fourth document relates to a wireless system for verifying a power transmission network.

However, this resonance phenomenon, which applies to the aforementioned documents, requires fixing the energy transmission frequency, while there are numerous applications requiring variable frequency transmission, to which the devices of the aforementioned documents would not be applicable.

Thus, devices that work in resonance cannot be used for these purposes and it is necessary to look for alternative ways to communicate said energy under these conditions.

There are other devices that are not based on resonant systems, although they use an alternating excitation with voltage control through feedback based on the electromotive force induced in a secondary as in WO 2014/179869 A1.

### BRIEF DESCRIPTION OF THE INVENTION

As indicated, the present invention provides an alternative solution to energy transmission and communications by means of a device according to claim 1. Preferred embodiments of the invention are defined in the dependent claims.

Unless otherwise defined, all terms (including technical and scientific terms) used herein are to be interpreted as is customary in the art. It is further understood that terms of common usage are also to be interpreted as is customary in the relevant art and not in an idealized or overly formalized sense, unless expressly defined herein.

In this text, the term "comprises" and its derivations (such as "comprising", etc.) should not be understood in an exclusive sense; that is, these terms should not be interpreted as excluding the possibility that what is described and defined could include other elements, steps, etc.

In a first inventive aspect, the invention relates to an energy and communication transfer device, comprising a first element and a second element, wherein
the first element comprises a first processing unit, a first power generator, a first ferromagnetic element, a first emitting winding connected to the first power generator and wound around the first ferromagnetic element, the first power generator being configured to generate electrical energy by means of pulses having a width and rate defined by the first processing unit;
the second element comprises a second processing unit, a second ferromagnetic element, a first adjustment circuit, a first charge storage device connected to the output of the first adjustment circuit, and a first receiving winding connected to the adjustment circuit and wound around the second ferromagnetic element, wherein the second processing unit is configured to measure a set of status data relating to the operation of the second element;
the first ferromagnetic element and the second ferromagnetic element are configured to be arranged in direct contact or at a stable distance of less than 0.05 mm, such that the magnetic flux generated in one ferromagnetic element is transferred to the other ferromagnetic element;
the second processing unit is configured to send status data to the first processing unit;
the first processing unit is configured to receive the status data of the second element and is configured to define the working width and rate of the energy pulses based on the status data of the second element.

In this device, two elements using ferromagnetic cores are positioned such that they are coupled in full induction. In this particular case, the first element acts in the role of the master and the second element acts in the role of slave.

This device allows energy transmission and communications between the two elements forming same, allowing the application thereof with energy demand loads at variable frequency. Since the device does not work in resonance, it can be used by means of physical contact of the two ferromagnetic elements or by means of the interposition between the two ferromagnetic elements of bodies that do not alter the magnetic flux between them.

The devices known in the prior art require that the transmission of electrical power from the element in the role of master to the element in the role of slave is performed with the magnetic cores and their windings operating as classical transformers. According to this model, in a first approach, the ratio between output and input voltages is adjusted through the ratio between the number of turns in the respective windings, and the power transfer is continuous and linearly controlled.

However, in the present invention, taking into account the arrangement between the elements and the fact that the magnetic cores work in full induction, the transmission by means of alternating fields and linear control of the transferred power is devoid of meaning.

In the present invention, the ratio between the number of turns in the magnetic cores is not relevant for energy transfer, which would facilitate the possibility of exchanging the roles of master and slave no matter how different the voltages necessary for the operation of the devices are.

Furthermore, in the present invention the transmitted energy is not controlled by means of resistance variations, but rather by means of controlling the pulse width, which confers greater efficiency to the system since it avoids losses due to the Joule effect.

One of the novelties of this invention is that no predefining of these roles is required: in various particular embodiments, the roles are not predefined and can be changed by means of a software command. This is an advantage over the prior art documents mentioned above, where the roles are predefined due to the technology used.

Status data is data relating to the operation of the second element, consisting of variables that must be within operating ranges to ensure the operation thereof. Typical examples of such status data are the voltage or current of the charge storage device, the state of charge or the temperature of the second element.

In particular embodiments of the present invention, these advantages are obtained, on the one hand, due to the use of digital power electronics in the first power generator, which allows the generation of pulses of high intensity and voltage with high time resolution. On the other hand, due to the use of high speed microcontrollers which have great capacity for the processing and transmission of the status data, which allows for digital feedback of the system, varying the pulse width and rate depending on the state of the charge storage device in real time.

In particular embodiments of the present invention, once the system is brought to full induction, the master is charged with magnetic energy by means of applying a voltage pulse in the first emitting winding. The energy transferred to the first ferromagnetic element is proportional to the duration of the pulse. The energy is transferred to the second ferromagnetic element creating a current in the first receiving winding that grows linearly over time and is stored suitably filtered in the charge storage device (comprising a capacitor, battery or the like). The state of charge of the charge storage device (or other variable, such as voltage or temperature) is, in particular embodiments, measured by its control processor and the information is sent to the first element in the form of status data of the second element, for regulation of the energy transferred from the first element by means of adjusting the duration (or width) and/or rate of the energy pulses generated by the first power generator. The use of alternating signals of defined frequency is not necessary. The system is equipped with auxiliary safety secondaries to detect the exceeding of boundary conditions.

Data transmission can be carried out by means of auxiliary windings wound around the same cores, by means of additional cores, optical transmissions or other processes.

Unlike other linear systems referred to in the prior art, the present invention may present several advantages.

First, in particular embodiments of the present invention, the element acting in the role of master can generate pulses having a software-adjustable duration, rate, sign and amplitude, so that they can be adapted to a wide variety of elements acting as slaves.

Furthermore, in particular embodiments of the present invention, in the element acting in the role of slave, the received pulses can be rectified with diodes and subsequently filtered. A better option is a phased rectification to improve the efficiency of the system. **The** filtering can be adjustable, for example, using magnetic amplifiers instead of simple self-inductions.

Furthermore, in particular embodiments of the present invention, when the element acting in the role of slave needs several voltages of different amplitude and/or sign, this element can request from the element in the role of master positive and negative pulses, or synchronously rectify the pulses.

Finally, in the event that the element in the role of slave requires several voltages, one of them is regulated by data transmission between the element in the role of slave and the element in the role of master, and the others are stabilized by inserting magnetic amplifiers between the receiving winding and the rectifier.

Communications between the first element (which has the role of master) and the second element (which has the role of slave) may be performed either by means of variations in pulse duration or width and the cadence (or rate) thereof (in the case of energy or data transmitted from the first element to the second element) or by variations in load, for data transmitted from the second element to the first element. Typically, the amplitude is chosen at the design stage and held constant.

**It** would also be possible to combine data and energy transmission by performing each of these actions at different frequencies: transmitting data at a frequency different from the frequency of the power transmitted from the first element to the second element. For this purpose, the first emitting winding and first receiving winding can be used as transmitters and receivers, or the auxiliary windings can be used. Possible interference with harmonics generated by the energy transmission pulses is thereby avoided.

In particular embodiments, the first element and/or the second element further comprises at least one auxiliary element, each auxiliary element being configured to measure magnetic flux in the corresponding ferromagnetic element.

It is thereby possible for the first element to self-regulate the magnetic flux generated, depending on the measurement received by the auxiliary element. This auxiliary element does not have to be a direct meter; it can be an element that is capable of measuring or calculating the flux, either directly or indirectly.

In particular embodiments, each auxiliary element comprises at least one auxiliary winding.

An auxiliary winding allows direct and simple measurement, which can be coupled to the normal operation of the circuit.

In particular embodiments,
the second element further comprises a second power generator, a second emitting winding connected to the second power generator and wound around the second ferromagnetic element, the second power generator being configured to generate electrical energy by means of pulses having a width and rate defined by the second processing unit;
the first element comprises a second adjustment circuit, a second charge storage device connected to the output of the second adjustment circuit, and a second receiving winding connected to the second adjustment circuit and wound around the first ferromagnetic element, wherein the first processing unit is further configured to measure a set of status data relating to the operation of the first element;
the first processing unit is configured to send status data to the second processing unit; and
the second processing unit is configured to receive the status data of the first element and is configured to define the working width and rate of the energy pulses based on the status data of the first element.

By introducing these features in the symmetrical elements (i.e. by introducing features specific to the second element in the first element and vice versa) a bidirectional transmission of data and energy is possible under the same conditions as in the original invention, thus increasing the potential of the invention.

In particular embodiments, the first power generator and/or the second power generator are configured to generate electrical power with variable working frequency and duty cycle, which depend on the status data of the second element.

The present invention does not require that the carrier be a continuous wave, it is sufficient for the power generator to be capable of emitting electrical pulses of varying width and rate. However, it is possible that the present invention may also operate when emitting electrical power with variable working frequency and duty cycle.

In particular embodiments, the first adjustment circuit and/or the second adjustment circuit comprises a rectifier circuit.

A rectifier circuit is advantageous when the pulse shape needs to be adapted to the charge storage device.

**In** particular embodiments,
the second processing unit is additionally configured to process the signal received in the first adjustment circuit and is additionally configured to modify operating parameters of the first adjustment circuit to control the signal received by the first charge storage device; and/or
the first processing unit is additionally configured to process the signal received in the second adjustment circuit and is additionally configured to modify operating parameters of the second adjustment circuit to control the signal received by the second charge storage device.

Sometimes the control is performed directly by software elements, which control the adjustment circuit, modifying its parameters to control the signal received by the corresponding charge storage device.

In particular embodiments, the first element comprises first fixing means and the second element comprises second fixing means configured to cooperate with the first fixing means to generate a mutual fixing between the first element and the second element.

The relative position of both elements is thereby fixed, so as to ensure optimum transmission of magnetic flux between the two elements.

In particular embodiments, the first fixing means and the second fixing means are magnetic fixing means.

Unlike other conventional mechanical methods, magnetic fixing has no external moving parts, which makes it robust against aggressive environments. It also acts before the parts are in physical contact, which facilitates centering and full induction attachment. The magnetic fixing is designed in such a way that it only consumes energy from the master device at the moment of performing said action. Fixing can thereby be performed even if the first element has no energy for it to be turned on. The relaxation of the connection can be performed by either of the two devices. This type of fixing is advantageous over mechanical fixing and allows a simple and reliable coupling.

In particular embodiments, the first magnetic fixing means and/or the second magnetic fixing means are configured to cause variable magnetic behavior such that, when modified by a user, the magnetic attraction between the two is reduced or eliminated.

Thus, during data and energy transmission, both elements are thereby fixed such that the operation can be performed in a reliable manner. However, due to this characteristic, it is also possible to separate both elements when they are not in use.

In particular embodiments, the first element comprises first alignment means and the second element comprises second alignment means configured to cooperate with the first alignment means to direct the relative position of the first element and the second element when the two elements are brought into contact.

Therefore, not only is contact ensured (direct contact by the intermediation of an element that does not disturb magnetic flux communication), but rather also the correct alignment of the first and second element is ensured, thus optimizing data and energy communication.

In particular embodiments, the first power generator and/or the second power generator is a switched power supply, in particular a DC/DC converter.

Power supplies of this type allow power generation with variable working frequency and duty cycle, and can be installed in portable devices.

In particular embodiments, the ferromagnetic material comprises ferrite.

Ferrite is especially suited to function as an electromagnetic core in magnetic flux transmission operations.

In particular embodiments, the first power generator and/or the second power generator comprises a power output comprising a MOSFET (metal-oxide-semiconductor field-effect transistors) bridge.

A MOSFET bridge is suitable to be able to emit positive, negative or alternating pulses.

In a second inventive aspect, the invention presents an energy and communication transfer method in a device according to the preceding claims, wherein the method comprises the steps of:
the first element and the second element being placed in contact or at a stable distance of less than 0.05 mm;
the first element sending a first communication signal to the second element;
the second element responding to the first signal by sending status data from the second element;
the first power generator sending at least one energy pulse with a working width and rate that depends on the status data of the second element.

In particular embodiments, the method further comprises a preliminary step in which the first element sends an electrical feed signal if it does not receive status data in response to the first signal.

### SUMMARY OF FIGURES

To complete the description, and in order to provide a better understanding of the invention, a set of drawings is provided. Said drawings form an integral part of the description and illustrate an embodiment of the invention, which should not be interpreted as a restriction of the scope of the invention, but only as an example of how the invention may be carried out. The drawings comprise the following figures:
Figure 1 shows a first embodiment of an energy and communication transfer device according to the invention.
Figure 2 shows a second embodiment of an energy and communication transfer device according to the invention.
Figure 3 shows a third embodiment of an energy and communication transfer device according to the invention.

The following reference numbers have been used in these figures:
- 1: First element
- 2: Second element
- 10: First processor
- 11: First DC/DC converter
- 12: First ferrite core
- 13: First emitting winding
- 14: Second adjustment circuit
- 15: Second charge storage device
- 16: Second operation selector
- 17: First connection device
- 18: Communications transmission winding
- 19: Auxiliary winding
- 20: Second processor
- 21: Second ferrite core
- 22: First adjustment circuit
- 23: First charge storage device
- 24: First receiving winding
- 25: Second DC/DC converter
- 26: First operation selector
- 27: Second connection device
- 28: Communications transmission winding
- 29: Auxiliary winding

### DETAILED DESCRIPTION OF A PARTICULAR EMBODIMENT

The embodiments are described in sufficient detail to enable the person skilled in the art to incorporate and implement the systems and processes described herein. It is important to understand that the embodiments may be provided in many alternative forms and should not be construed as limited to the examples set forth herein.

Accordingly, although the embodiments may be modified in various ways and take various alternative forms, specific embodiments are shown in the drawings and described in detail below as examples. It is not intended to be limited to the particular forms disclosed. On the contrary, all modifications, equivalents and alternatives falling within the scope of the appended claims are to be included. Elements of the embodiments are systematically denoted with the same reference numbers throughout the drawings and the detailed description, where applicable.

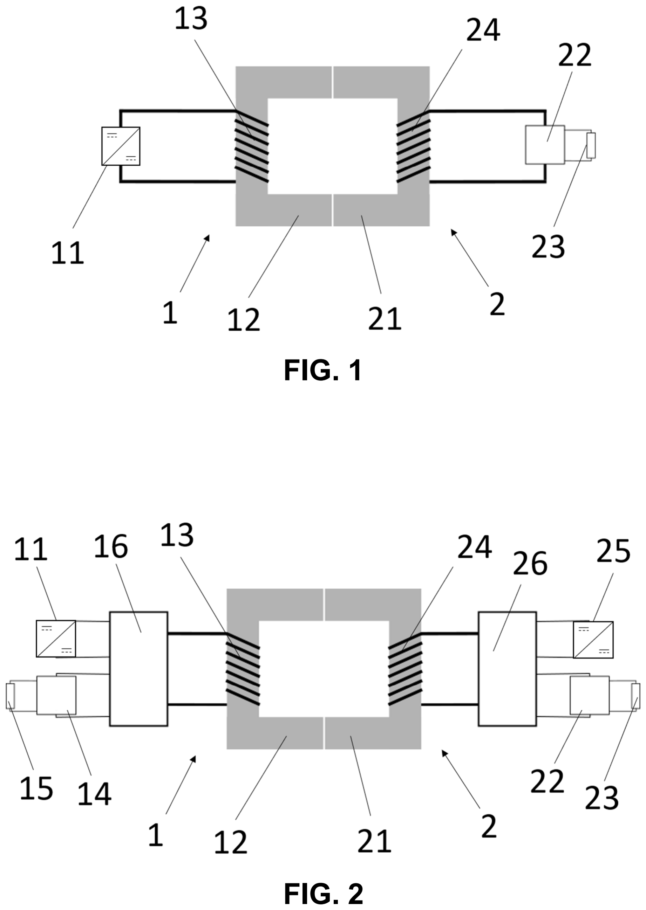

Figure 1 shows a first embodiment of an energy and communication transfer device according to the invention.

This energy and transfer device comprises a first element 1 and a second element 2.

The first element 1 comprises a first DC/DC converter 11, a first ferrite core 12 and a first emitting winding 13 connected to the first DC/DC converter 11 and wound around the first ferrite core 12.

In turn, the second element 2 comprises a second ferrite core 21, a first rectifier circuit 22, a first charge storage device 23 connected to the output of the first rectifier circuit 22 and a first receiving winding 24 connected to the rectifier circuit 22 and wound around the second ferrite core 21.

The operation of this device is as follows: when the first element 1 and the second element 2 are arranged in contact, the first DC/DC converter 11 is configured to generate electrical power with variable working frequency and duty cycle.

The first charge storage device 23, in turn, can communicate its demand to the first DC/DC converter 11 by means of magnetic flux conservation in the ferrite cores: although preliminary data is initially communicated, once the connection between the two elements is established, the energy transfer is self-regulated by magnetic flux conservation in the ferrite cores. To this end, once the connection is established, the first load 23, through the communication link, will perform the necessary energy requests to the first DC/DC converter 11 to begin the magnetic flux transfer. Once established, the first DC/DC converter 11 will maintain said magnetic flux, which is in charge of transmitting energy and communications between both elements.

Communications between the first DC/DC converter 11 and the first load 23 may thereby be performed either by means of duty cycle variations in generated power (in the case of energy or data transmitted from the first element to the second element) or by means of variations in load, for data transmitted from the second element to the first element.

Energy and communication transfer is thereby achieved depending on the demand of the first load 23, which will be variable.

This communication can be performed with the two ferrite cores 12, 21 in contact, as seen in this figure, or also with the interposition of a thin insulating element (e.g., between a sterile room containing the second element 2 and a non-sterile machine room containing the first element 1).

Figure 2 shows an alternative embodiment of the invention.

This second embodiment allows data and energy communication to be bidirectional, by means of incorporating a series of additional elements with respect to the embodiment of the previous figure.

Thus, in this case, the second element 2 further comprises a second DC/DC converter 25. The first receiving winding 24 acts as a second emitting winding since it is connected to the second DC/DC converter 25 by means of a first operation selector 26. In this case, the second DC/DC converter 25 is configured to generate electrical power with variable working frequency and duty cycle.

Furthermore, to enable reception in the bidirectional case, the first element 1 comprises a second rectifier circuit 14 and a second load 15 connected to the output of the second rectifier circuit 14. The first emitting winding 13 acts as a second receiving winding and is connected to the second rectifier circuit 14 by means of a second operation selector 16.

In this case, the second DC/DC converter 25 is configured to generate an electrical signal the working frequency and duty cycle of which depend on the demand received from the second load 15.

This device allows, under the same principle explained above, energy and communication transfer in both directions, since power generation and reception elements are duplicated.

If necessary, the first element 1 and/or the second element 2 may comprise an additional auxiliary winding for measuring at least the magnetic flux in the corresponding ferrite core.

To ensure the operation of this transmission device, even when an isolation sheet is interposed between both elements 1, 2, the device may comprise a series of additional elements that allow both elements to be fixed for the duration of the communication in a reliable manner.

First, the first ferrite core comprises a first magnetic fixing element and the second ferrite core comprises a second magnetic fixing element. These magnetic fixing elements are magnets the attractive force of which can be interrupted by the interposition of a magnetic shield.

In addition, the ferrite cores comprise guides that allow directing the relative position of the first element and the second element when the two elements are brought into contact.

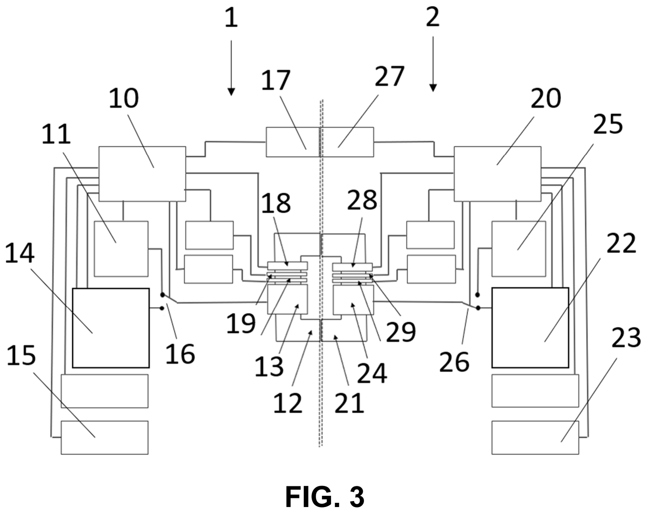

Figure 3 provides a different embodiment of a device according to the invention.

This case is similar to that of Figure 1, but in this embodiment, the first power generator 11 is configured to generate electrical energy by means of pulses having a variable width and rate. Furthermore, there is data communication between a processor 20 contained in the second element 2 and a processor 10 contained in the first element 1, such that the second element 2 can communicate a series of status data to the first element 1, and the processor 1 of the first element will determine the width and rate of the electrical pulses generated by the first power generator 11 based on this status data.

Therefore, in this case, the operation of this device would be as follows.

First, the processor 10 of the first element activates the magnetostatic attachment device between the elements. For this purpose, it generates an alternating signal to excite a small coupling winding connected to its output capacitor. The frequency of the alternating signal is the resonance frequency of the circuit formed by the coupling winding and its output capacitor, so consumption is very small. Once the first element 1 and the second element 2 are coupled with full induction, the resonance frequency changes and, accordingly, consumption changes, which is interpreted by the processor 10 as the signal that the device is ready for energy transfer.

Then, the processor 10 of the first element 1, acting as the master, sends a signal to the second element 2, acting as the slave, to receive the energy requirements from the charge storage device 23 of the second element. The processor 20 of the second element 2 responds by sending a series of status data over the communication line. With the received status data, the processor 10 of the first element 1 calculates the appropriate pulse variables so that the first power generator 11, which uses a MOSFET bridge as output, can generate such pulses and begin the process of transferring energy from the first element 1 to the charge storage device 23 of the second device 2.

In case no response is received from the second element 2 through the communication line, it would imply that the second element 2, which acts as slave, is not powered. In that case, the processor 10 of the first element initiates a gradual and intelligent powering process to achieve waking up at least the processor 20 and the communications of the second element 2.

In the second element 2, once full induction coupling has occurred, the processor receives the signal from the processor of the first element 1, responds with status data and waits to receive the requested energy.

In the case where the second element 2 has a single receiving winding 24, the output of the winding could go directly to the rectifier circuit 22. In the case where there is more than one energy receiving winding, the winding with the highest consumption could operate without the need for a variable self-induction device, but the remaining receiving windings would each be connected to a variable self-induction device to stabilize their output voltages by means of controlling, by the corresponding processor, the impedance of the variable self-induction (magnetic amplifier) located between the receiving winding and the rectifying device.

If synchronous rectification is used, the processor 20 controls the rectification bridge MOSFETs contained in the first adjustment circuit 22.

The rectified output passes through the adjustable filter (magnetic amplifiers) regulated by the processor. From the filter it passes to the charge storage device, which is also monitored by the processor to generate the status data, which will be subsequently sent to the processor of the other device to make the necessary adjustments to the parameters of the electrical pulses.

## Claims

1. An energy and communication transfer device, comprising a first element (1) and a second element (2), wherein
the first element (1) comprises a first processing unit (10), a first power generator (11), a first ferromagnetic element (12), a first emitting winding (13) connected to the first power generator (11) and wound around the first ferromagnetic element (12), the first power generator (11) being configured to generate electrical energy by means of pulses having a width and rate defined by the first processing unit (10);
the second element (2) comprises a second processing unit (20), a second ferromagnetic element (21), a first adjustment circuit (22), a first charge storage device (23) connected to the output of the first adjustment circuit (22), and a first receiving winding (24) connected to the adjustment circuit (22) and wound around the second ferromagnetic element (21), wherein the second processing unit (20) is configured to measure a set of status data relating to the operation of the second element (2);
the first ferromagnetic element (12) and the second ferromagnetic element (2) are configured to be arranged in direct contact or at a stable distance of less than 0.05 mm, such that the magnetic flux generated in one ferromagnetic element is transferred to the other ferromagnetic element;
the second processing unit (20) is configured to send the status data to the first processing unit (10);
the first processing unit (10) is configured to receive the status data of the second element and is configured to define the working width and rate of the energy pulses based on the status data of the second element.

2. The device according to claim 1, wherein the first element (1) and/or the second element (2) further comprises at least one auxiliary element, each auxiliary element being configured to measure the magnetic flux in the corresponding ferromagnetic element.

3. The device according to any of the preceding claims, wherein
the second element (2) further comprises a second power generator (25), a second emitting winding (26) connected to the second power generator (25) and wound around the second ferromagnetic element (21), the second power generator (25) being configured to generate electrical energy by means of pulses having a width and rate defined by the second processing unit (20);
the first element (1) comprises a second adjustment circuit (14), a second charge storage device (15) connected to the output of the second adjustment circuit (14), and a second receiving winding (16) connected to the second adjustment circuit (14) and wound around the first ferromagnetic element (12), wherein the first processing unit (10) is further configured to measure a set of status data relating to the operation of the first element (1);
the first processing unit (10) is configured to send status data to the second processing unit (20); and
the second processing unit (20) is configured to receive the status data of the first element and is configured to define the working width and rate of the energy pulses based on the status data of the first element.

4. The device according to any one of the preceding claims, wherein the first power generator and/or the second power generator are configured to generate electrical power with variable working frequency and duty cycle, which depend on the status data of the second element.

5. The device according to any one of the preceding claims, wherein the first adjustment circuit and/or the second adjustment circuit comprises a rectifier circuit.

6. The device according to any of the preceding claims, wherein
the second processing unit (20) is additionally configured to process the signal received in the first adjustment circuit (22) and to modify operating parameters of the first adjustment circuit (22) to control the signal received by the first charge storage device (23); and/or
the first processing unit (10) is additionally configured to process the signal received in the second adjustment circuit (14) and to modify operating parameters of the second adjustment circuit (14) to control the signal received by the second charge storage device (15).

7. The device according to any of the preceding claims, wherein the first power generator and/or the second power generator are configured to emit positive and negative pulses.

8. The device according to any one of the preceding claims, wherein the first element comprises first fixing means (17) and the second element comprises second fixing means (27) configured to cooperate with the first fixing means (17) to generate a mutual fixing between the first element (1) and the second element (2).

9. The device according to claim 8, wherein the first fixing means (17) and the second fixing means (27) are magnetic fixing means.

10. The device according to claim 9, wherein the first magnetic fixing means (17) and/or the second magnetic fixing means (27) are configured to cause variable magnetic behavior such that, when modified by a user, the magnetic attraction between the two is reduced or eliminated.

11. The device according to any one of the preceding claims, wherein the first element (1) comprises first alignment means and the second element (2) comprises second alignment means configured to cooperate with the first alignment means to direct the relative position of the first element and the second element when both elements are brought into contact.

12. The device according to any of the preceding claims, wherein the first power generator (11) and/or the second power generator (25) is a switched power supply, in particular a DC/DC converter.

13. The device according to claim 12, wherein the first power generator (11) and/or the second power generator (25) comprises a power output comprising a metal-oxide-semiconductor field-effect transistor bridge.

14. Method for energy and communication transfer in a device according to the preceding claims, wherein the method comprises the steps of:
the first element and the second element being placed in contact or at a stable distance of less than 0.05 mm;
the first element sending a first communication signal to the second element;
the second element responding to the first signal by means of sending status data from the second element;
the first power generator sending at least one energy pulse with a working width and rate that depends on the status data of the second element.

15. The method according to claim 14, further comprising a preliminary stage wherein the first element sends an electrical feed signal if it does not receive status data in response to the first signal.
